# EUROPÄISCHE PATENTANMELDUNG

(11) **EP 4 336 709 A1**
(43) Veröffentlichungstag der Anmeldung: **13.03.2024**
(21) Anmeldenummer: 22194157.8
(22) Anmeldetag: 06.09.2022
(51) Int. Cl.: H02K 3/14, H02K 3/50

(54) **EINZELANSTEUERUNG VON TEILLEITERN EINES MIT LEITERSTÄBEN VERSEHENEN STATORS EINER DYNAMOELEKTRISCHEN MASCHINE**

(71) Anmelder: Siemens Aktiengesellschaft, 80333 München (DE)
(72) Erfinder: Brandl, Konrad, 93107 Thalmassing (DE)
(74) Vertreter: Siemens Patent Attorneys

(57) **Zusammenfassung**

Die Erfindung betrifft einen Antrieb (20) mit einer rotatorischen dynamoelektrischen Maschine (1) mit einem Stator (2) und einem Rotor (3), wobei der Stator (2) ein Wicklungssystem in einem magnetisch leitfähigen Körper, insbesondere einem Blechpaket (11) aufweist, wobei Stator (2) und Rotor (3) durch einen Luftspalt (23) voneinander getrennt sind,
wobei das Wicklungssystem in Nuten (18) des magnetisch leitfähigen Körpers angeordnet ist, die zu dem Luftspalt (23) weisen,
wobei das Wicklungssystem pro Nut (18) einen in Teilleiter (14,15) unterteilten Leiterstab (8) aufweist, dessen Teilleiter (14, 15) an einem ersten Ende des Leiterstabes (8) mit zumindest einem Wechselrichtermodul (6) elektrisch kontaktiert sind und dessen Teilleiter (14, 15) am anderen Ende, also zweiten Ende des Leiterstabes (8) an der anderen Stirnseite des magnetisch leitfähigen Körpers des Stators (2) mit den anderen Teilleitern (14, 15) der weiteren in den jeweiligen Nuten (18) angeordneten Leiterstäben (8) zu einem Kurzschlussring (9) zusammengefasst sind.

## Beschreibung

Die Erfindung betrifft einen Antrieb mit einer dynamoelektrischen Maschine mit Wechselrichtermodulen, ein Verfahren zur Herstellung eines Stators einer dynamoelektrischen Maschine mit Wechselrichtermodulen, als auch die Verwendung eines derartigen Antriebs.

Wicklungssysteme von Statoren dynamoelektrischer Maschinen sind aus Wickeldrähten oder Leiterstäben aufgebaut, die in Nuten eines magnetisch leitfähigen Körpers des Stators angeordnet sind.

Besteht das Wicklungssystem nicht aus einer verteilten dreiphasigen Wicklung mittels Kabel oder Drähten, sondern aus einer Anzahl von Leiterstäben, ist aufgrund der vergleichsweise geringen Induktivität jedoch eine hohe Stromstärke erforderlich. Diese hohe Stromstärke benötigt aufgrund des geringen ohmschen Widerstandes der Leiterstäbe lediglich eine verhältnismäßig geringe Spannung (<100V). Diese geringe Spannung ermöglicht es, Wechselrichtermodule, mit denen die Leiterstäbe angesteuert werden, in relativ geringem Abstand zueinander an der dynamoelektrischen Maschine anzuordnen.

Diese Leiterstäbe werden auf einer Stirnseite des magnetisch leitfähigen Körpers des Stators über einen Kurzschlussring miteinander verbunden, und auf der anderen Stirnseite des magnetisch leitfähigen Körpers des Stators durch jeweils zugeordnete Wechselrichtermodule gespeist, wie dies beispielsweise aus der DE 10 2005 032 965 A1 bekannt ist.

Diese aus dem Wicklungskonzept resultierenden, geringen Spannungen ermöglichen einen kompakten Aufbau des gesamten Antriebs, also der dynamoelektrischen Maschine mit der Leistungselektronik.

Anstelle der komplexen, arbeitsintensiven verteilten Statorwicklung wird dabei auf eine kostengünstige, robuste Stabwicklung zurückgegriffen. Jede einzelne Statornut wird abhängig von den Betriebsbedingungen mit einem Stab bestückt. Jeder Stab wird bisher mit einer eigenen Leistungselektronik für die Stromversorgung und Regelung, dem Wechselrichtermodul verbunden. Die Phasenzahl der Maschine ist somit identisch mit der Anzahl Nuten im Stator. Das für den Betrieb der Maschine notwendige magnetische Feld wird durch hohe Ströme (bis zu einigen 1000 A) in den Statorstäben bei gleichzeitig niedrigen Spannungen erzeugt. Die hohen Stabströme wiederum werden in der bisherigen Ausführung durch Parallelschalten von Halbleiterbauelementen (Si-Bauelemente) generiert, was sehr hohe Anforderungen an den Hardwareaufbau und die Zündimpulsansteuerung der Bauelemente der Wechselrichtermodule stellt.

An die Regelungssoftware werden hohe Anforderung zur gleichzeitigen Generierung und Übertragung der Zündimpulse an die Stromrichter gestellt.

Schalten bei derartig hohen Strömen jedoch nur wenige Bauelemente verzögert, führt dies zur thermischen Zerstörung des Platinenaufbaus des jeweiligen Wechselrichtermoduls.

Beim Hardwareaufbau ist die gleichmäßige Kühlung der Bauelemente, die gleichförmige Stromführung und die niederohmige Verbindungsausführung für den (Hoch-)Stromübergang von der Platine auf den Statorstab entscheidend.

Ausgehend davon liegt der Erfindung die Aufgabe zugrunde, einen Antrieb mit einer dynamoelektrischen Maschine bereitzustellen, deren Stator Leiterstäbe und einen Kurzschlussring aufweist, und der die oben genannten Nachteile vermeidet.

Die Lösung der gestellten Aufgabe gelingt durch einen Antrieb mit einer rotatorischen dynamoelektrischen Maschine mit einem Stator und einem Rotor, wobei der Stator ein Wicklungssystem in einem magnetisch leitfähigen Körper, insbesondere einem Blechpaket aufweist, wobei Stator und Rotor durch einen Luftspalt voneinander getrennt sind,
wobei das Wicklungssystem in Nuten des magnetisch leitfähigen Körpers angeordnet ist, die zu dem Luftspalt weisen,
wobei das Wicklungssystem pro Nut einen in Teilleiter unterteilten Leiterstab aufweist, dessen Teilleiter an einem ersten Ende des Leiterstabes mit zumindest einem Wechselrichtermodul elektrisch kontaktiert sind und dessen Teilleiter am anderen Ende, also zweiten Ende des Leiterstabes an der anderen Stirnseite des magnetisch leitfähigen Körpers des Stators mit den anderen Teilleitern der weiteren in den jeweiligen Nuten angeordneten Leiterstäben zu einem Kurzschlussring zusammengefasst sind.

Die Lösung der gestellten Aufgabe gelingt auch durch ein Verfahren zur Herstellung eines Stators einer rotatorischen dynamoelektrischen Maschine, der ein Wicklungssystem in einem magnetisch leitfähigen Körper, insbesondere einem Blechpaket aufweist, durch folgende Schritte:
- Herstellen des magnetisch leitfähigen hohlzylindrischen Körpers, insbesondere des Blechpaketes des Stators, wobei Nuten zu der Innenmantelfläche des hohlzylindrischen Körpers weisen,
- Kontaktieren von Anschlusselementen an ein erstes axiales Ende jeweils eines Leiterstabes einer Nut, wobei der Leiterstab aus Teilleitern aufgebaut ist, die einzeln und/oder als Teilleiterbündel mit den Anschlusselementen versehen werden, und die parallel oder verroebelt zumindest innerhalb der Nut verlaufen,
- Axiales Einsetzen der mit den Anschlusselementen versehenen Teilleitern bzw. Teilleiterbündel der jeweiligen Leiterstäbe in die jeweiligen Nuten des magnetisch leitfähigen Körpers bzw. Blechpaketes,
- Kontaktieren zumindest eines Kurzschlussringes an den zweiten Enden der Leiterstäbe und Positionieren und Kontaktieren der Wechselrichtermodule an die mit den Anschlusselementen versehenen Teilleitern bzw. Teilleiterbündeln der Leiterstäbe.

Die Lösung der gestellten Aufgabe gelingt erfindungsgemäß auch durch einen Antrieb im industriellen Umfeld, insbesondere bei Verdichtern, Kompressoren oder Pumpen, dessen dynamoelektrische Maschine einen erfindungsgemäßen Stator aufweist.

Erfindungsgemäß wird das komplexe, arbeitsintensive verteilte Wicklungssystem in einem Stator einer dynamoelektrischen Maschine eines erfindungsgemäßen Antriebs durch eine kostengünstiges, robustes Wicklungssystem aus Leiterstäben ausgebildet. Jede einzelne Nut des Stators ist mit einem aus Teilleitern aufgebauten Leiterstab versehen. Jeder Teilleiter bzw. Teilleiterbündel eines Leiterstabes wird mit einer eigenen Leistungselektronik für die Stromversorgung und Regelung, also einem eigenen Wechselrichtermodul verbunden. Das für den Betrieb der dynamoelektrischen Maschine notwendige magnetische Feld wird durch vergleichsweise hohe Ströme in den Leiterstäben bei gleichzeitig niedrigen Spannungen (beispielsweise < 100V) erzeugt. Der Strom eines Leiterstabes teilt sich auf die Teilleiter dieses Leiterstabes dementsprechend auf.

Der erfindungsgemäße Ansatz des Antriebs besteht nun darin, nicht mehr durch Parallelschalten vieler Stromrichter bzw. Wechselrichtermodulen den hohen Stabstrom zu erzeugen, sondern jedem einzelnen Stromrichterelement bzw. Wechselrichtermodul ist einen Teilleiter oder ein Teilleiterbündel (also zwei, drei, vier oder mehrere einzelne parallel geschaltete Teilleiter) des Leiterstabes zugewiesen.

Als Wechselrichtermodul wird dabei eine Leistungshalbleiteranordnung verstanden, die eingangsseitig an einer gleichspannungsquelle angeschlossen ist und wechselstromseitig an einen Teilleiter oder Teilleiterbündel eines Leiterstabes angeschlossen ist, wobei eine Regelung dieses Wechselrichtermodules oder eine den Wechselrichtermodulen überlagerte Regelung die jeweiligen Leistungshalbleiter dementsprechend ansteuert.

Die Parallelschaltung des Gesamtstromes pro Nut wird somit durch die Querschnittsaufteilung des einzelnen Leiterstabes erreicht und der angestrebte hohe Stabstrom pro Nut des Stators wird durch die Summe der Teilleiterströme in dieser Nut erzeugt.

Mit der Verlagerung der Parallelschaltung der Ströme von der Halbleiterebene eines Wechselrichtermoduls auf die jeweils einzelne Ebene eines Leiterstabes ergeben sich eine Reihe von Vorteilen:
- Es ist nunmehr keine gleichförmige Stromführung auf den Platinen des Wechselrichtermoduls zum zentralen Anschlusspunkte für den Stromübergang zum Leiterstab erforderlich. Mit anderen Worten: erfindungsgemäß wird nunmehr der Strom direkt vom Wechselrichtermodul zum Stab-Teilleiter oder Stab-Telleiterbündel übertragen.
- Somit sind beispielsweise keine 600 A (oder noch höhere Ströme) niederohmig von der Platine des Wechselrichtermoduls zum Leiterstab mittels spezieller besonders niederohmiger Verbindungstechniken, wie Stumpfschweißen, zu übertragen, sondern lediglich beispielsweise 10 x 60 A, was die Kontaktierung vom Wechselrichtermodul zum Teilleiter oder Teilleiterbündel über deren jeweiligen Anschlusselemente erheblich vereinfacht, indem diese z.B. als Steckverbindungen ausführbar sind.

Durch den dadurch möglichen Einsatz von Steckverbindern als Anschlusselemente ist ein leichterer Austausch der Hardware, z.B. des Wechselrichtermoduls im Servicefall realisierbar.

Erfindungsgemäß ergibt sich eine wesentliche höhere Redundanz des Antriebs, da nicht mehr ein ganzer Leiterstab und damit das betroffene Wechselrichtermodul ausfallen kann, sondern allenfalls Teile davon bzw. Teilleiter oder Teilleiterbündel bzw. deren zugeordnete Wechselrichtermodule.

Eine verzögerte Übertragung von Zündimpulsen hat somit keine Überschreitung der Stromtragfähigkeit anderer Leistungshalbleiter des Wechselrichtermoduls zur Folge und ist daher weniger kritisch. Es stellt sich ggf. innerhalb des Leiterstabes einer Nut lediglich eine sehr kurzzeitige Stromunsymmetrie und damit verbundene Feldunsymmetrie zu Leiterstäben in benachbarten Nuten mit gleicher Stromansteuerung ein. Dies schränkt jedoch den ordnungsgemäßen Betrieb des Antriebs nicht ein.

Mit der Verlagerung der Parallelschaltung der Ströme von der Halbleiterebene eines Wechselrichtermoduls auf die jeweils einzelne Leiterstabebene ergeben sich auch weniger zeitkritische Anforderungen an die Regelungs-Software zur Generierung der Zündimpulse der Leistungshalbleiter eines Wechselrichtermoduls.

Erfindungsgemäß wird auch die Kühlung der Leistungsbauelemente eines Wechselrichtermoduls vereinfacht, da jedes Wechselrichtermodul für sich betrachtet werden kann und nicht mehr über eine gemeinsame Stromführung verbunden sind.

Aufgrund von Betriebsfrequenzen von 50 Hz und höher ist der Leiterstab zur Reduktion von Wirbelstromverlusten generell nicht mehr massiv ausgeführt, sondern wird erfindungsgemäß aus blanken oder gegeneinander isolierten Teilleitern aufgebaut, die massiv oder hohl ausgeführt sein können.

Des Weiteren können die Teilleiter eines Leiterstabes im axialen Verlauf der Nut betrachtet jede geometrische Position in der Nut durchlaufen.

Insbesondere werden die Teilleiter eines Leiterstabes Verroebelt. Bei einer Verroebelung wird die Position jeden Teilleiters über die axiale Länge der Nut betrachtet derart geführt, dass eine Stromverdrängung vermieden werden kann. Über den axialen Verlauf betrachtet erfährt nunmehr jeder Abschnitt des Teilleiters des geroebelten Leiters über die Nutlänge im Mittel die gleiche vertikale Position in der Nut, sodass die Stromdichte in allen verdrillten parallelen Teilleitern annähernd konstant ist und eine Stromverdrängung vermieden wird. Eine Stromverdrängung bedingte Widerstandserhöhung die zwangsläufig mit erhöhten ohmschen Verlusten verbunden wäre, kann somit stark reduziert werden.

Erfindungsgemäß sind aufgrund der Entkopplung der Teilleiter eines Leiterstabes somit auch Leiterstäbe bzw. deren Teilleiter ohne Verroebelung einsetzbar.

Erfindungsgemäß werden anstatt des Gesamtquerschnitts nun diese einzelnen Teilleiter oder Teilleiterbündel eines Leiterstabes zusammengefasst - je nach Strombelastbarkeit des Stromrichters auf der Platine - und mit den Halbleiterbausteinen verbunden.

Waren in der ursprünglichen Ausführung beispielsweise 40 Teilleiter eines Stabes zusammengefasst und wurden mit 10 parallelen Stromrichterelementen a 60 A dem Leiterstab damit 600 A eingeprägt, so werden nun an jeden der zehn 60 A-Stromrichter vier Teilleiter angeschlossen. In der Summe ergeben sich für den Leiterstab in der Nut wiederum 600 A.

Der Stromrichter bzw. Wechselrichtermodule und die Software zum Betrieb der Hardwarekomponenten sind nicht mehr losgelöst voneinander zu betrachten. Maschine und Stromrichter sind direkt miteinander verbunden und als integrale Funktionseinheit zu sehen.

Erfindungsgemäß wird nicht mehr durch Parallelschalten vieler Bauelemente der hohe Stabstrom erzeugt, sondern jedem Stromrichter-Bauelement wird ein Teilleiter oder Teilleiterbündel des Stabes zugewiesen. Die Parallelschaltung wird somit durch die Querschnittsaufteilung eines Leiterstabes pro Nut des Stators bewerkstelligt und der hohe Stabstrom in einer Nut wird nunmehr durch die Summe der Teilleiterströme in dieser Nut erzeugt, ohne der erhöhten Ausfallwahrscheinlichkeit des Wechselrichtermoduls ausgesetzt zu sein.

Die Erfindung sowie weitere vorteilhafte Ausgestaltungen der Erfindung werden anhand prinzipiell dargestellter Ausführungsbeispiele näher erläutert, darin zeigen:
- FIG 1: perspektivische Schnittdarstellung eines Antriebs,
- FIG 2: Längsschnitt eines Antriebs,
- FIG 3: Detailansicht eines Leiterstabes an einer Stirnseite des Stators,
- FIG 4 bis 9: verschiedenste Darstellungen unterschiedlicher Teilleiter eines Leiterstabes,
- FIG 10, 11: Längsschnitt einer prinzipielle Anordnung von Wechselrichtermodulen an Teilleitern eines Leiterstabes,
- FIG 12, 13: Draufsicht auf eine prinzipielle Anordnung von Wechselrichtermodulen an Teilleitern eines Leiterstabes.

Es sei angemerkt, dass sich Begriffe wie "axial", "radial", "tangential" etc. auf die in der jeweiligen Figur bzw. im jeweils beschriebenen Beispiel zum Einsatz kommende Achse 5 beziehen. Mit anderen Worten beziehen sich die Richtungen axial, radial, tangential stets auf eine Achse 5 des Rotors 3 und damit auf die entsprechende Symmetrieachse des Stators 2. Dabei beschreibt "axial" eine Richtung parallel zur Achse 5, "radial" beschreibt eine Richtung orthogonal zur Achse 5, auf diese zu oder auch von ihr weg, und "tangential" ist eine Richtung, die in konstantem radialem Abstand zur Achse 5 und bei konstanter Axialposition kreisförmig um die Achse 5 herum gerichtet ist. Der Ausdruck "in Umfangsrichtung" ist mit "tangential" gleichzusetzen.

In Bezug auf eine Fläche, bspw. eine Querschnittsfläche, beschreiben die Begriffe "axial", "radial", "tangential" etc. die Orientierung des Normalenvektors der Fläche, d.h. desjenigen Vektors, der senkrecht auf der betroffenen Fläche steht.

Unter dem Ausdruck "koaxiale Bauteile", bspw. koaxiale Komponenten wie Rotor 3 und Stator 2, werden hier Bauteile verstanden, die gleiche Normalenvektoren aufweisen, für die also die von den koaxialen Bauteilen definierten Ebenen parallel zueinander sind. Des Weiteren soll der Ausdruck beinhalten, dass die Mittelpunkte koaxialer Bauteile auf der gleichen Rotations- bzw. Symmetrieachse liegen. Diese Mittelpunkte können jedoch auf dieser Achse ggf. an verschiedenen axialen Positionen liegen und die genannten Ebenen also einen Abstand >0 voneinander haben. Der Ausdruck verlangt nicht zwangsläufig, dass koaxiale Bauteile den gleichen Radius haben.

Der Begriff "komplementär" meint im Zusammenhang mit zwei Komponenten, welche "komplementär" zueinander sind, dass ihre äußeren Formen derart ausgestaltet sind, dass die eine Komponente vorzugsweise vollständig in der zu ihr komplementären Komponente angeordnet werden kann, so dass sich die innere Oberfläche der einen Komponente und die äußere Oberfläche der anderen Komponente idealerweise lückenlos bzw. vollflächig berühren. Konsequenterweise ist also im Falle von zwei zueinander komplementären Gegenständen die äußere Form des einen Gegenstandes durch die äußere Form des anderen Gegenstandes festgelegt. Der Begriff "komplementär" könnte durch den Begriff "invers" ersetzt werden.

Der Übersichtlichkeit wegen werden in den Figuren teilweise in den Fällen, in denen Bauteile mehrfach vorhanden sind, häufig nicht sämtliche dargestellten Bauteile mit Bezugszeichen versehen.

Die beschriebenen Ausführungen können beliebig kombiniert werden. Ebenso sind auch Einzelmerkmale der jeweiligen Ausführungen kombinierbar, ohne das Wesen der Erfindung zu verlassen.

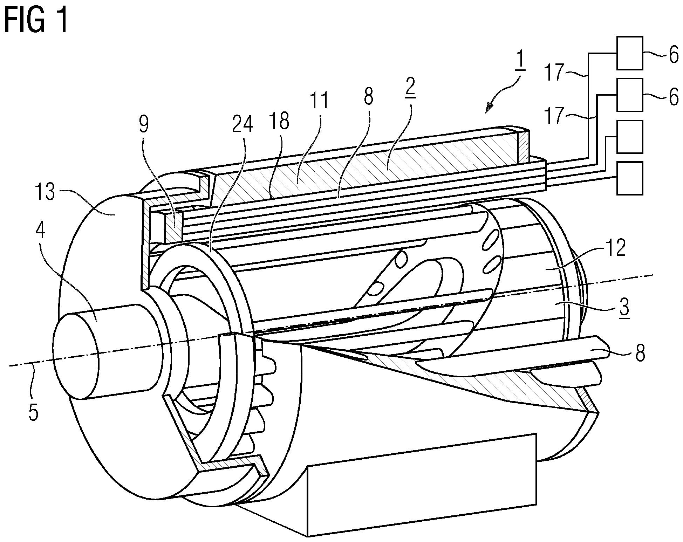

FIG 1 zeigt in einer perspektivischen Schnittdarstellung einen Antrieb 20 mit einer dynamoelektrischen Maschine 1 und unmittelbar an deren Stirnseite angeordnete Wechselrichtermodulen 6. Die dynamoelektrische Maschine 1 weist ein Blechpaket 11 eines Stators 2 auf, in dem in zu einem Luftspalt 23 weisenden Nuten ein Wicklungssystem 7 angeordnet ist. Dieses Wicklungssystem 7 des Stators 2 ist dabei aus Leiterstäben 8 aufgebaut, die sich aus Teilleitern 14, 15 zusammensetzen und die auf der einen Stirnseite des Stators 2 über Anschlusselemente 17 mit jeweils den Teilleitern 14, 15 bzw. Teilleiterbündeln zugeordneten Wechselrichtermodulen 6 eines Leiterstabes 8 kontaktiert sind. Auf der anderen Stirnseite des Stators 2 sind diese Leiterstäben 8, die sich aus Teilleitern 14, 15 bzw. Teilleiterbündeln zusammensetzen zu einem Kurzschlussring 9 des Stators 2 elektrisch zusammengefasst.

Auf dieser anderen Stirnseite ist ebenso eine Abdeckung 13 vorhanden, die ggf. auch als Lagerschild ausgeführt sein kann.

Vom Stator 2 durch den Luftspalt 23 beabstandet, befindet sich koaxial angeordnet ein Rotor 3, der in diesem Fall einen Kurzschlusskäfig aufweist, der ebenfalls in einem Blechpaket 12 angeordnet ist. Der Rotor 3 ist mit einer Welle 4 drehfest verbunden und dreht dabei im Betrieb der dynamoelektrischen Maschine 1 um die Achse 5.

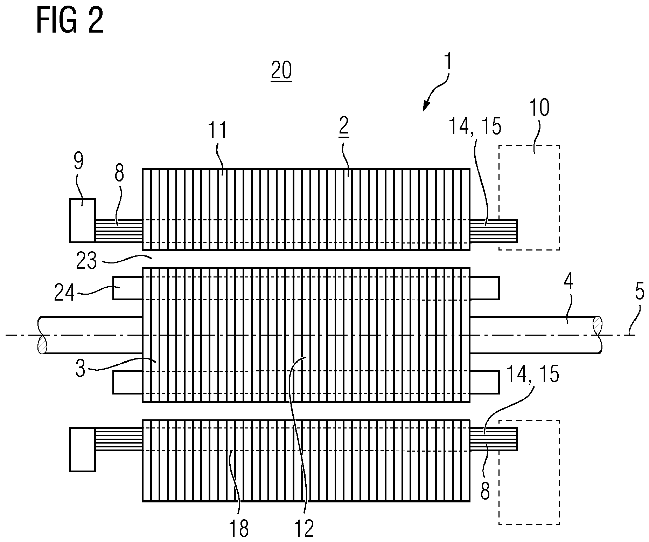

FIG 2 zeigt in einem prinzipiellen Längsschnitt den Antrieb 20, wobei an der Stirnseite der dynamoelektrischen Maschine 1 der Bauraum 10 der Wechselrichtermodule 6 der Teilleiter 14, 15 bzw. Teilleiterbündel der jeweiligen Leiterstäbe 8 angeordnet ist. Durch diesen erfindungsgemäßen Aufbau ergibt sich ein äußerst kompakter Aufbau des gesamten Antriebs 20 also der dynamoelektrischen Maschine 1 mit seinen Wechselrichtermodulen 6.

Die Wechselrichtermodule 6 sind an eine Gleichspannungsnetz oder einen dem Antrieb 20 zugeordneten Zwischenkreis eines dem Antrieb 20 zugewiesenen Umrichters elektrisch angeschlossen.

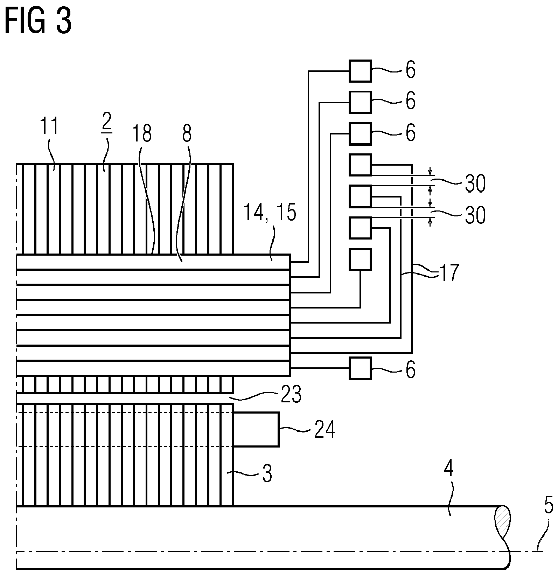

FIG 3 zeigt in einer Detaildarstellung eine Stirnseite der dynamoelektrischen Maschine 1 bei der der Leiterstab 8 in Teilleiter 14,15 aufgeteilt ist und jeder Teilleiter 14,15 ein eigenes Wechselrichtermodul 6 aufweist. Selbstverständlich können auch zwei, drei, vier oder mehrere Teilleiter 14,15 zu einem Teilleiterbündel zusammengefasst sein und von einem Wechselrichtermodul angesteuert bzw. "versorgt" werden.

Dabei wird die Ausfallwahrscheinlichkeit der Halbleiterelemente aufgrund von Ungenauigkeiten bei der Zündimpulsansteuerung vermieden. Dies gelingt vor allem indem das Parallelschalten der Teilleiter 14, 15 oder Teilleiterbündel in den Leiterstab 8 verlegt wird. Aufgrund der geringen Spannungen (<100V) sind zwischen den Wechselrichtermodulen 6 dementsprechend geringe Abstände 30 erforderlich. Durch diese Abstände 30 können im Betrieb des Antriebs 20 u.a die Wechselrichtermodule 6 durch eine Kühlluftstrom gekühlt werden.

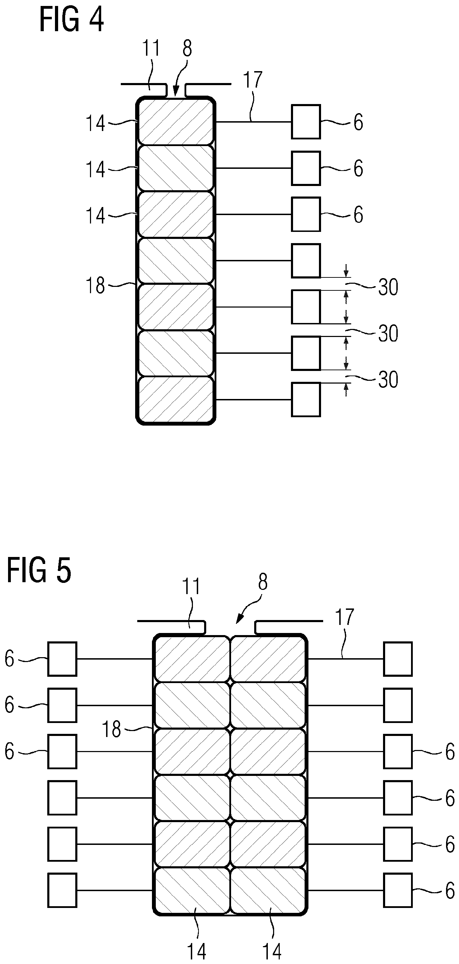

FIG 4 zeigt einen Leiterstab 8 bei dem die Teilleiter 14,15 radial übereinander in der Nut 18 angeordnet sind und jeder Teilleiter 14 über ein Anschlusselement 17 mit seinem Wechselrichtermodul 6 elektrisch verbunden ist.

FIG 5 zeigt einen weiteren Leiterstab 8 bei dem die Teilleiter 14 radial paarweise übereinander in der Nut 18 angeordnet sind. Dabei ist wiederum jeder Teilleiter 14 über ein Anschlusselement 17 mit seinem zugeordneten Wechselrichtermodul 6 elektrisch kontaktiert.

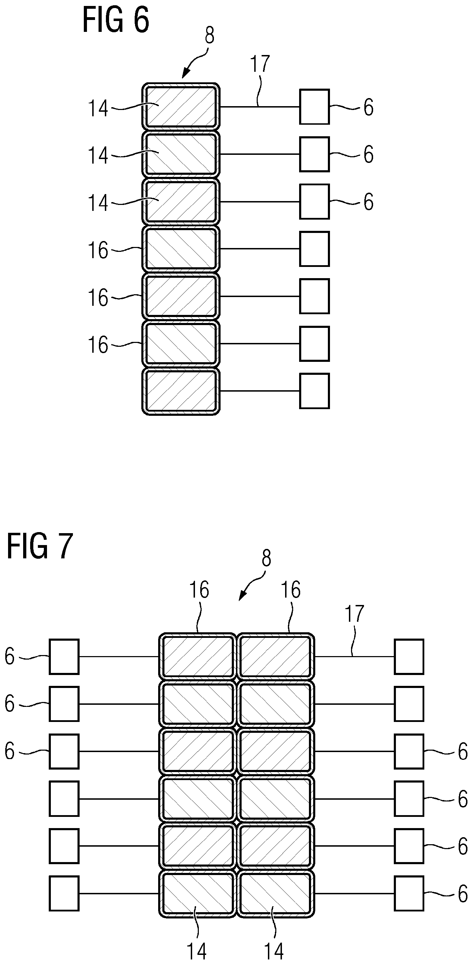

FIG 6 zeigt eine weitere Möglichkeit der Teilleiteranordnung, die sich von der Teilleiteranordnung gemäß FIG 4 nur dadurch unterscheidet, dass die Teilleiter 14, mit einer speziellen Isolationsschicht 16 versehen sind.

Die Teilleiter 14 gemäß FIG 7 sind wie die Teilleiter 14 gemäß FIG 5 angeordnet und mit einer Isolationsschicht 16 versehen.

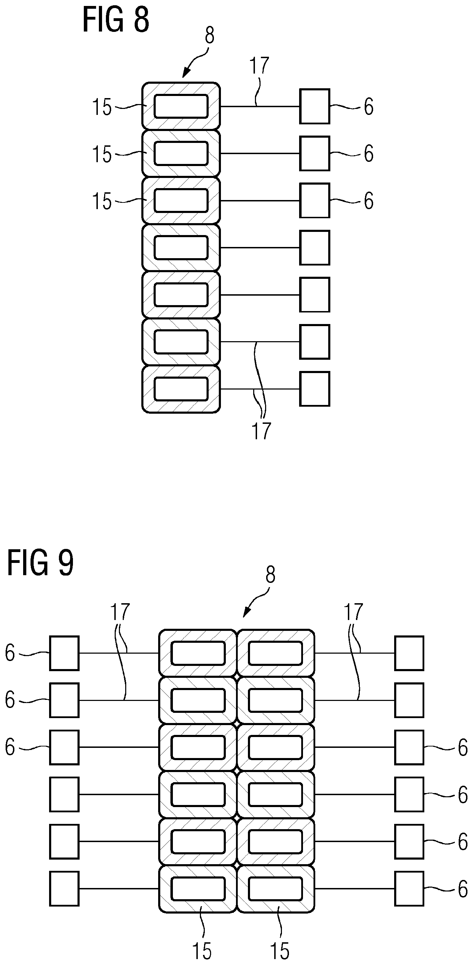

FIG 8 zeigt einen Leiterstab 8 dessen radial angeordnete Teilleiter 15 hohl ausgeführt sind und ebenso über Anschlusselemente 7 mit ihren jeweiligen Wechselrichtermodul 6 kontaktiert sind.

FIG 9 zeigt einen Leiterstab 8 dessen paarweise radial nebeneinander angeordnete Teilleiter 15 ebenso hohl ausgeführt sind.

Hohle Teilleiter 15 haben den Vorteil das gegebenenfalls ein Kühlfluid durch diese Teilleiter 15 geführt werden kann.

Sämtliche Teilleiter - als massive Teilleiter 14 oder hohle Teilleiter 15 ausgeführt - können eine Isolationsschicht 16 (Kunststoffschicht oder Lackschicht) aufweisen oder blank ausgeführt sein. Jedoch ist auch bei blanken Teilleiter 14, 15 eine Oxidschicht vorhanden, die für die Isolation innerhalb der Nut 18 aufgrund der vergleichsweise geringen Spanungspotentiale zwischen den Teilleiter 14, 15 im Betrieb des Antriebs 20 ausreichen sein dürfte.

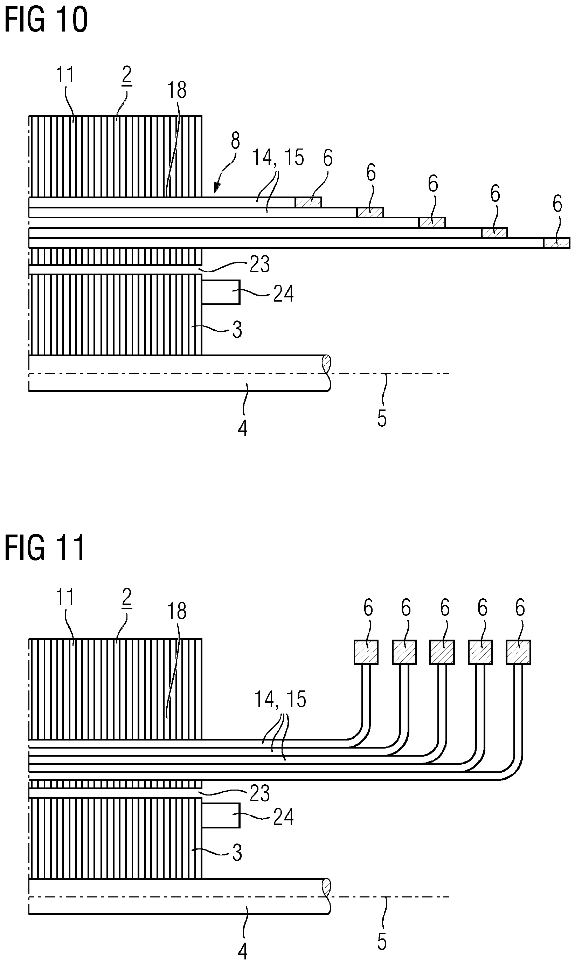

FIG 10 zeigt in einem Längsschnitt eine prinzipielle Anordnung von Wechselrichtermodulen 6 an Teilleitern 14, 15 eines Leiterstabes 8. Dabei weisen die Teilleiter 14, 15 axial unterschiedliche Längen in axialer Erstreckung des Leiterstabes 8 also parallel zur Achse 5 auf, um u.a. einen Abstand 30 der Wechselrichtermodule 6 zu generieren.

FIG 11 zeigt in einem Längsschnitt eine weitere prinzipielle Anordnung von Wechselrichtermodulen 6 an Teilleitern 14, 15 eines Leiterstabes 8. Dabei weisen die Teilleiter 14, 15 axial unterschiedliche Längen auf, wobei die Enden der Teilleiter 14, 15 vorzugsweise nach radial außen abgebogen sind, um dort die Wechselrichtermodule 6 zu positionieren und zu kontaktieren. Damit kann u.a. einen Abstand 30 der Wechselrichtermodule 6 geschaffen werden, der die Kühlung der Wechselrichtermodule 6 verbessert, als auch die Montage vereinfacht.

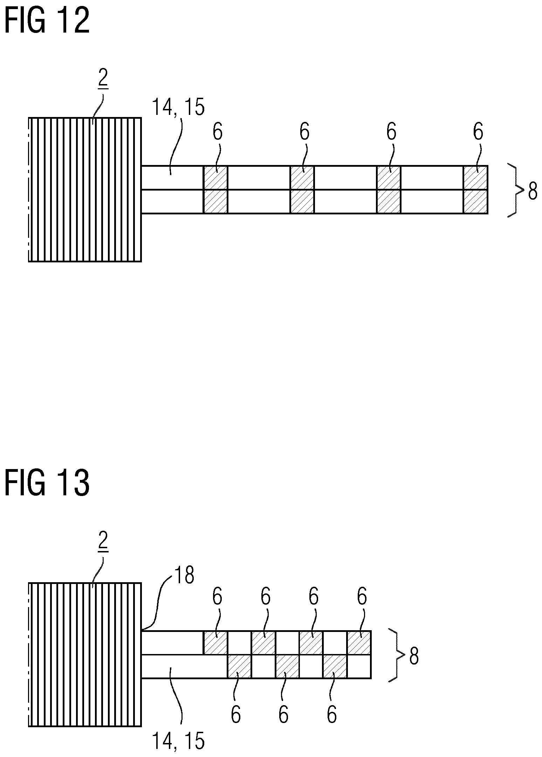

FIG 12 zeigt eine Draufsicht auf eine prinzipielle Anordnung von Wechselrichtermodulen 6 an Teilleitern 14, 15 eines Leiterstabes 8. Der Blick ist dabei radial zur Achse 5 gerichtet. Dabei ist der Leiterstab 8 beispielsweise aus Teilleitern 14, 15 gemäß den FIG 5, 7, 9 ausgebildet, indem die radiale Höhe in einer Nut 18 durch zwei nebeneinander angeordnete Teilleiter 14, 15 eingenommen wird. Die Teilleiter 14, 15 sind dabei in Umfangsrichtung betrachtet nebeneinander - beispielsweise wie in FIG 10 - angeordnet. Mit anderen Worten: jede radiale Schicht von Teilleitern 14, 15 in einer Nut 18 weist eine bzgl. einer anderen radialen Schicht unterschiedliche axiale Länge auf, wobei an den Enden dieser jeweiligen Teilleiter 14, 15 sich dann die Wechselrichtermodule 6 befinden. Die Wechselrichtermodule 6 der Teilleiter 14, 15 in radial unterschiedlichen Schichten der Teilleiter 14, 15 sind axial und radial versetzt angeordnet.

FIG 13 zeigt einen Aufbau ähnlich dem Aufbau von FIG 12, jedoch sind dabei auch die Wechselrichtermodule 6 von Teilleitern 14,15 in einer radialen Schicht zusätzlich versetzt angeordnet.

Die gezeigten Anordnungen sind beispielhaft und können sich ebenso auf mehr als zwei Teilleiter pro radialer Schicht in einer Nut 18 beziehen. Ebenso lassen sich Wechselrichtermodule 6 für einzelne Teilleiter 14, 15 auch für Teilleiterbündel, also elektrisch parallel geschaltete Teilleiter 14, 15 gemäße den obigen Ausführungen anordnen.

In weiteren Ausgestaltungen können die oben erwähnten Teilleiter 14, 15 des Leiters 8 entweder über die axiale Länge des Stators 2 bzw. des Blechpakets 11 des Stators 2 parallel oder verroebelt geführt werden. Bei einer Verroebelung wird die Position jeden Teilleiters 14, 15 über die axiale Länge betrachtet derart geführt, dass eine Stromverdrängung vermieden werden kann. Über den axialen Verlauf einer Nut 18 betrachtet, erfährt nunmehr jeder Abschnitt des Teilleiters 14, 15 des geroebelten Leiterstabes 8 über die axiale Nutlänge im Mittel die gleiche vertikale Position in der Nut 18, sodass die Stromdichte in allen verdrillten parallelen Teilleitern 14, 15 annähernd konstant ist und eine Stromverdrängung vermieden wird. Eine Stromverdrängung bedingte Widerstandserhöhung die zwangsläufig mit erhöhten ohmschen Verlusten verbunden wäre, kann somit stark reduziert werden.

Ein derartiger Antrieb 20 wird bei Fahrzeugantrieben, wie Schiffsantrieben, Traktionsantrieben im Schienenverkehr, bei LKWs und PKWs, als auch im industriellen Umfeld, insbesondere bei Verdichtern, Kompressoren oder Pumpen aufgrund der Kompaktheit und einfachen Einstellung eines weiten Drehzahlbereichs des Antriebs 20 eingesetzt.

## Patentansprüche

1. Antrieb (20) mit einer rotatorischen dynamoelektrischen Maschine (1) mit einem Stator (2) und einem Rotor (3), wobei der Stator (2) ein Wicklungssystem (7) in einem magnetisch leitfähigen Körper, insbesondere einem Blechpaket (11) aufweist, wobei Stator (2) und Rotor (3) durch einen Luftspalt (23) voneinander getrennt sind,
wobei das Wicklungssystem (7) in Nuten (18) des magnetisch leitfähigen Körpers angeordnet ist, die zu dem Luftspalt (23) weisen,
wobei das Wicklungssystem pro Nut (18) einen in Teilleiter (14,15) unterteilten Leiterstab (8) aufweist, dessen Teilleiter (14, 15) an einem ersten Ende des Leiterstabes (8) mit zumindest einem Wechselrichtermodul (6) elektrisch kontaktiert sind und dessen Teilleiter (14, 15) am anderen Ende, also zweiten Ende des Leiterstabes (8) an der anderen Stirnseite des magnetisch leitfähigen Körpers des Stators (2) mit den anderen Teilleitern (14, 15) der weiteren in den jeweiligen Nuten (18) angeordneten Leiterstäben (8) zu einem Kurzschlussring (9) zusammengefasst sind.

2. Antrieb (20) nach Anspruch 1, **dadurch gekennzeichnet, dass** mehrere Teilleiter (14,15), insbesondere ein Teilleiterbündel eines Leiterstabes (8) an ein Wechselrichtermodul (6) angeschlossen sind.

3. Antrieb (20) nach Anspruch 1, **dadurch gekennzeichnet, dass** jeder Teilleiter (14,15) eines Leiterstabes (8) an ein Wechselrichtermodul (6) angeschlossen ist.

4. Antrieb (20) nach einem der vorhergehenden Ansprüche, **dadurch gekennzeichnet, dass** die Teilleiter (14,15) zumindest innerhalb des magnetisch leitfähigen Körpers parallel verlaufen.

5. Antrieb (20) nach einem der vorhergehenden Ansprüche 1 bis 3, **dadurch gekennzeichnet, dass** die Teilleiter (14,15) zumindest innerhalb des magnetisch leitfähigen Körpers ihre in der Nut (18) vorhandene Position im axialen Verlauf der Nut (18) wechseln, insbesondere verroebelt angeordnet sind.

6. Antrieb (20) nach einem der vorhergehenden Ansprüche, **dadurch gekennzeichnet, dass** die Teilleiter (15) massiv oder als Hohlleiter ausgeführt sind.

7. Antrieb (20) nach einem der vorhergehenden Ansprüche, **dadurch gekennzeichnet, dass** die Teilleiter (14,15) in Umfangsrichtung betrachtet zumindest abschnittsweise mit einer Isolationsschicht (16) versehen sind.

8. Antrieb (20) nach einem der vorhergehenden Ansprüche, **dadurch gekennzeichnet, dass** zwischen zwei oder mehreren axial und/oder radial angeordneten Wechselrichtermodulen (6) Kühlelemente (19) zwischen den Wechselrichtermodulen (6) vorgesehen sind, die zumindest abschnittsweise in wärmeleitendem Kontakt mit den benachbarten Wechselrichtermodulen (6) stehen.

9. Verfahren zur Herstellung eines Stators (2) einer rotatorischen dynamoelektrischen Maschine (1), der ein Wicklungssystem (7) in einem magnetisch leitfähigen Körper, insbesondere einem Blechpaket (11) aufweist, durch folgende Schritte:
- Herstellen des magnetisch leitfähigen hohlzylindrischen Körpers, insbesondere des Blechpaketes (11) des Stators (2), wobei Nuten (18) zu der Innenmantelfläche des hohlzylindrischen Körpers weisen,
- Kontaktieren von Anschlusselementen (17) an ein erstes axiales Ende (7) jeweils eines Leiterstabes (8) einer Nut (18), wobei der Leiterstab (8) aus Teilleitern (14,15) aufgebaut ist, die einzeln und/oder als Teilleiterbündel mit den Anschlusselementen (17) versehen werden, und die parallel oder verroebelt zumindest innerhalb der Nut (18) verlaufen,
- Axiales Einsetzen der mit den Anschlusselementen (17) versehenen Teilleitern (14,15) bzw. Teilleiterbündel der jeweiligen Leiterstäbe (8) in die jeweiligen Nuten (18) des magnetisch leitfähigen Körpers bzw. Blechpaketes (11),
- Kontaktieren zumindest eines Kurzschlussringes (9) an den zweiten Enden der Leiterstäbe (8) und Positionieren und Kontaktieren der Wechselrichtermodule (6) an die mit den Anschlusselementen (17) versehenen Teilleitern (14, 15) bzw. Teilleiterbündeln der Leiterstäbe (8).

10. Verfahren zur Herstellung eines Stators (2) einer rotatorischen dynamoelektrischen Maschine (1) nach einem der Ansprüche 6 bis 9, **dadurch gekennzeichnet, dass** vorhandene Isolationsmaterialien am Leiterstab (8), insbesondere den Teilleitern (14,15) bzw. Teilleiterbündeln und/oder Anschlusselement (17) zumindest an dem Bereich ihrer Kontaktstelle mittels des Kontaktiervorganges entfernt werden, insbesondere weggebrannt werden.

11. Verwendung eines Antriebs (20) nach Anspruch 1 bis 5 oder eines Stators (2), hergestellt nach einem der Ansprüche 6 bis 10, in einem Antrieb (20) im industriellen Umfeld, insbesondere bei Verdichtern, Kompressoren oder Pumpen.
